# EUROPEAN PATENT SPECIFICATION

(11) **EP 3 885 222 B1**
(45) Date of publication and mention of the grant of the patent: **01.02.2023**
(21) Application number: 19886723.6
(22) Date of filing: 21.11.2019
(51) Int. Cl.: B60W 40/00, B60W 30/19, F16H 61/02, F16H 61/28, F16H 59/68

(54) **CONTROL METHOD AND CONTROL APPARATUS FOR GEAR DETECTION OF A SPEED REDUCER**
STEUERUNGSVERFAHREN UND -VORRICHTUNG ZUR GANGERKENNUNG EINES GETRIEBES
PROCÉDÉ ET DISPOSITIF DE COMMANDE PERMETTANT LA DÉTECTION DE VITESSE D'UN RÉDUCTEUR

(30) Priority: 22.11.2018 CN 201811396844
(43) Date of publication of application: 29.09.2021
(73) Proprietor: Great Wall Motor Company Limited, Hebei 071000 (CN)
(72) Inventor: LIU, Qiang, Baoding city, Hebei 071000 (CN); LI, Jianhui, Baoding city, Hebei 071000 (CN); LIU, Dongdong, Baoding city, Hebei 071000 (CN); CAO, Xingshun, Baoding city, Hebei 071000 (CN); LIU, Xinqiang, Baoding city, Hebei 071000 (CN); ZHANG, Hongwen, Baoding city, Hebei 071000 (CN); BU, Taotao, Baoding city, Hebei 071000 (CN)
(74) Representative: dompatent von Kreisler Selting Werner - Partnerschaft von Patent- und Rechtsanwälten mbB
(86) International application number: PCT/CN2019/120018
(87) International publication number: WO 2020/103913

(56) References cited:
- EP-A2- 0 310 387
- CN-A- 102 913 613
- CN-A- 104 964 029
- CN-B- 104 455 377
- US-A1- 2009 150 033

## Description

### CROSS-REFERENCE TO RELATED APPLICATIONS

The present invention claims priority to Chinese Patent Application No. 201811396844.7, filed to Great Wall Motor Company Limited on November 22, 2018, entitled "Vehicle, and Control Method and Apparatus for Gear Detection of Speed Reducer".

### FIELD OF TECHNOLOGY

The present invention relates to the technical field of vehicles, and more particularly, to a control method for gear detection of a speed reducer, a control apparatus for gear detection of a speed reducer, and a vehicle.

### BACKGROUND

An oil-electric hybrid electric vehicle has various hybrid systems, and may include, for example, an electric drive axle system (power system) composed of a battery, a motor (power generation and driving integrated motor), a speed reducer, and various controllers. In order to ensure that gear information of the speed reducer in the system can be accurately obtained, a gear shifting mechanism in the system needs to detect a gear hard-stop point (a set position) in a gear self-learning mode and assign values to gears and each key point, where the gear shifting mechanism may be composed of a synchronizer assembly, a driving, a lead screw, a shifting fork, a shifting fork position sensor, a controller, etc., and the driving motor is controlled by the controller to realize gear switching.

In the related art, the controller generally provides a constant voltage to the driving motor to drive the shifting fork to move towards the gear hard-stop point, and after the shifting fork moves to the gear hard-stop point, a pulse number of the gear hard-stop point is recorded (e.g., a pulse number of a Hall signal output by a Hall sensor may be used as the pulse number of the gear hard-stop point), so that a distance between gear hard-stop points is calculated according to the pulse number, each gear is assigned, and the range of each gear is set, so as to realize gear self-learning.

However, the shifting fork and the gear hard-stop point are prone to deformation of the shifting fork, spring-back of the shifting fork, etc. after the hard-stop point is detected in the gear self-learning process, so that the recorded pulse number deviates from an actual value greatly, and the failure rate of gear self-learning is high.

US 2009/150033 A1 describes a shift position detecting device comprises a shift position sensor that continuously issues an output data that represents a shift position of the gear selection mechanism; and a control unit. In US 2009/150033 A1, the control unit includes a first shifting load instruction section that controls the shift actuator to shift the gear selection mechanism to the shift gear-in establishing position with a first shifting load; a second shifting load instruction section that, after completion of shifting of the gear selection mechanism to the lo shift gear-in establishing position by the first shifting load instruction section, controls the shift actuator to reduce the shifting load from the first shifting load to a second shifting load which is lower than the first shifting load; and a shift gear-in establishing position memory section that stores an output data is issued from the shift position sensor when the shift actuator is controlled by the second shifting load instruction section, as an information data that represents completion of shifting of the gear selection mechanism to the shift gear-in establishing position.

Additional state of the art relevant for the present invention is described in CN 104 964 029 A1, CN 102 913 613 A1 and CN 104 455 377 B, wherein these documents relate to gear position control methods, which do not disclose the steps of reducing a control voltage of a driving motor from a preset first voltage value to preset second voltage value or gradually reducing the control voltage from the first voltage value to 0.

### SUMMARY

The present invention is directed to solving, at least to some extent, one of the technical problems in the related art. To this end, a first object of the present invention is to provide a control method for gear detection of a speed reducer. A shifting fork can be effectively prevented from deforming, and can be effectively prevented from springing back, so that a pulse number of a gear hard-stop point can be accurately recorded, and the failure rate of gear self-learning can be reduced.

A second object of the present invention is to provide a control apparatus for gear detection of a speed reducer.

A third object of the present invention is to provide a vehicle.

A fourth object of the present invention is to provide an electronic device.

A fifth object of the present invention is to provide a non-temporary computer-readable storage medium.

To achieve the above objects, embodiments in a first aspect of the present invention provide a control method for gear detection of a speed reducer as defined in claim 1. The method includes: detecting whether a shifting fork reaches a gear hard-stop point in a gear self-learning process; reducing a control voltage of a driving motor from a preset first voltage value to a preset second voltage value when detecting that the shifting fork reaches the gear hard-stop point, reducing the control voltage to 0 after continuing for a preset first time, and after reducing the control voltage to 0 recording a current first pulse value as a pulse number of the gear hard-stop point; or, gradually reducing the control voltage from the first voltage value to 0 when detecting that the shifting fork reaches the gear hard-stop point, and after reducing the control voltage to 0 recording a current second pulse value as a pulse number of the gear hard-stop point.

In the control method for gear detection of a speed reducer according to the embodiments of the present invention, whether a shifting fork reaches a gear hard-stop point is detected in a gear self-learning process, a control voltage of a driving motor is reduced from a preset first voltage value to a preset second voltage value when detecting that the shifting fork reaches the gear hard-stop point, the control voltage is reduced to 0 after continuing for a preset first time, and a current first pulse value is recorded as a pulse number of the gear hard-stop point; or, the control voltage is gradually reduced from the first voltage value to 0 when detecting that the shifting fork reaches the gear hard-stop point, and a current second pulse value is recorded as a pulse number of the gear hard-stop point. Therefore, a shifting fork can be effectively prevented from deforming, and can be effectively prevented from springing back, so that a pulse number of a gear hard-stop point can be accurately recorded, and the failure rate of gear self-learning can be reduced.

In addition, the control method for gear detection of a speed reducer according to the above embodiments of the present invention may further have the following additional technical features.

According to one embodiment of the present invention, the gradually reducing the control voltage from the first voltage value to 0 includes: gradually reducing the control voltage from the first voltage value to 0 according to a preset voltage reduction gradient.

According to one embodiment of the present invention, after detecting that the shifting fork reaches the gear hard-stop point, the method further includes: determining whether time after the shifting fork reaches the gear hard-stop point exceeds a preset second time; and if yes, executing the step of reducing a control voltage of a driving motor from a preset first voltage value to a preset second voltage value, or executing the step of gradually reducing the control voltage from the first voltage value to 0.

According to one embodiment of the present invention, the detecting whether a shifting fork reaches a gear hard-stop point includes: determining whether the current of the driving motor exceeds a preset current threshold; and if yes, determining that the shifting fork reaches the gear hard-stop point.

To achieve the above objects, embodiments in a second aspect of the present invention provide a control apparatus for gear detection of a speed reducer as defined in claim 5.

In the control apparatus for gear detection of a speed reducer according to the embodiments of the present invention, the detection module detects whether a shifting fork reaches a gear hard-stop point in a gear self-learning process, and the execution module reduces a control voltage of a driving motor from a preset first voltage value to a preset second voltage value when detecting that the shifting fork reaches the gear hard-stop point, reduces the control voltage to 0 after continuing for a preset first time, and records a current first pulse value as a pulse number of the gear hard-stop point, or, gradually reduces the control voltage from the first voltage value to 0 when detecting that the shifting fork reaches the gear hard-stop point, and records a current second pulse value as a pulse number of the gear hard-stop point. Therefore, a shifting fork can be effectively prevented from deforming, and can be effectively prevented from springing back, so that a pulse number of a gear hard-stop point can be accurately recorded, and the failure rate of gear self-learning can be reduced.

In addition, the control apparatus for gear detection of a speed reducer according to the above embodiments of the present invention may further have the following additional technical features.

According to one embodiment of the present invention, the execution module is specifically configured, when gadually reducing the control voltage, to: gradually reduce the control voltage from the first voltage value to 0 according to a preset voltage reduction gradient.

To achieve the above objects, embodiments in a third aspect of the present invention provide a vehicle, which comprises a speed reducer having a driving motor and a shift fork, and which includes the control apparatus for gear detection of said speed reducer provided by the embodiments in the second aspect of the present invention.

In the vehicle according the embodiments of the present invention, by means of the above control apparatus for gear detection of a speed reducer, a shifting fork can be effectively prevented from deforming, and can be effectively prevented from springing back, so that a pulse number of a gear hard-stop point can be accurately recorded, and the failure rate of gear self-learning can be reduced.

To achieve the above objects, embodiments in a fourth aspect of the present invention provide a non-temporary computer-readable storage medium, having a computer program stored thereon, where the program, when executed by a processor, implements the control method for gear detection of a speed reducer provided by the embodiments in the first aspect of the present invention.

In the non-temporary computer-readable storage medium according the embodiments of the present invention, by performing the above control method for gear detection of a speed reducer, a shifting fork can be effectively prevented from deforming, and can be effectively prevented from springing back, so that a pulse number of a gear hard-stop point can be accurately recorded, and the failure rate of gear self-learning can be reduced.

### BRIEF DESCRIPTION OF THE DRAWINGS

FIG. 1 is a flowchart of a control method for gear detection of a speed reducer according to embodiments of the present invention.
FIG. 2 is a flowchart of a control method for gear detection of a speed reducer according to one specific embodiment of the present invention.
FIG. 3 is a schematic block diagram of a control apparatus for gear detection of a speed reducer according to embodiments of the present invention.

### DESCRIPTION OF THE EMBODIMENTS

Description will now be made in detail to the embodiments of the present invention, examples of which are illustrated in the accompanying drawings, where same or similar reference numerals refer to same or similar elements or elements having same or similar functions throughout. The embodiments described below by reference to the accompanying drawings are exemplary and are intended to be illustrative of the present invention and are not to be construed as limiting the present invention, which is defined by the appended claims.

A control method for gear detection of a speed reducer, a control apparatus for gear detection of a speed reducer, a vehicle, an electronic device, and a non-temporary computer-readable storage medium according to the embodiments of the present invention will be described below with reference to the accompanying drawings.

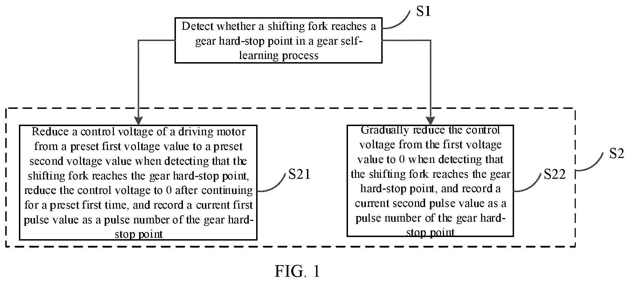

FIG. 1 is a flowchart of a control method for gear detection of a speed reducer according to embodiments of the present invention. As shown in FIG. 1, the control method for gear detection of a speed reducer according to the embodiments of the present invention may include the following steps.

At S1, whether a shifting fork reaches a gear hard-stop point is detected in a gear self-learning process.

According to one embodiment of the present invention, before whether a shifting fork reaches a gear hard-stop point is detected, the method further includes that: the driving motor is controlled to drive the shifting fork to move towards the gear hard-stop point according to the first voltage value. The first voltage value may be calibrated according to an actual situation. For example, the first voltage value may be 3 V The gear hard-stop point is a position point corresponding to a position where the shifting fork cannot move.

Specifically, in the gear self-learning process, a constant voltage, i.e. a voltage with a first voltage value, is provided to a driving motor by a controller to drive a shifting fork, so that the shifting fork moves towards a gear hard-stop point. At this moment, whether the shifting fork reaches the gear hard-stop point may be detected by the controller in real time, i.e. whether the shifting fork reaches a predetermined position may detected.

It is to be noted that the first voltage value provided to the drive motor by the controller may include a forward voltage value (e.g., +3 V) and a backward voltage value (e.g., -3 V). When the first voltage value provided to the driving motor by the controller is a forward voltage value, the shifting fork may move towards a gear hard-stop point at one end. When the first voltage value provided to the driving motor by the controller is a backward voltage value, the shifting fork may move towards a gear hard-stop point at the other end.

According to one embodiment of the present invention, the operation that whether a shifting fork reaches a gear hard-stop point is detected includes that: whether the current of the driving motor exceeds a preset current threshold is determined; and if yes, it is determined that the shifting fork reaches the gear hard-stop point.

As a possible implementation, in the gear self-learning process, the current of the driving motor may be detected by the controller in real time, and whether the shifting fork reaches the gear hard-stop point may be determined according to the magnitude of the current of the driving motor. If the current of the driving motor is larger than a preset current threshold, it is determined that the shifting fork reaches the gear hard-stop point. The preset current threshold may be calibrated according to an actual situation. For example, the current threshold may be 30 A.

It is to be noted that in the gear self-learning process at present, a current pulse value (e.g., a pulse number of a Hall signal output by a Hall sensor in a motor) is directly recorded and used as a pulse number of a hard-stop point after the controller detects that the current of the driving motor exceeds a certain limit value, i.e., that the shifting fork reaches the gear hard-stop point. However, in practical invention, after a gear hard-stop point is detected, a driving force of the driving motor to the shifting fork is large, and the shifting fork and the gear hard-stop point are prone to deformation. If a current pulse value is used as a pulse number of the hard-stop point, the recorded pulse value deviates from an actual value, and if the voltage of the driving motor is directly set to 0, the shifting fork is easy to spring back, thereby also resulting in a deviation of the recorded pulse value from the actual pulse value.

Therefore, in the embodiments of the present invention, step S2 may be performed after step S1 is finished, where step S2 may include step S21 or step S22, that is, step S21 may be performed or step S22 may be performed after step S1 is finished.

At S21, a control voltage of a driving motor is reduced from a preset first voltage value to a preset second voltage value when it is detected that the shifting fork reaches the gear hard-stop point, the control voltage is reduced to 0 after continuing for a preset first time, and a current first pulse value is recorded as a pulse number of the gear hard-stop point.

It is to be understood that after the driving motor drives the shifting fork to move towards the gear hard-stop point and it is detected that the shifting fork reaches the gear hard-stop point, as the control voltage of the driving motor is higher, the driving force of the driving motor to the shifting fork is larger, and the shifting fork is more likely to deform. Meanwhile, if the control voltage of the driving motor is directly set to 0, the shifting fork is likely to spring back.

Therefore, as a possible implementation, after it is detected that the shifting fork reaches the gear hard-stop point, the control voltage of the driving motor may be appropriately reduced by the controller, i.e. the control voltage of the driving motor is reduced from a preset first voltage value to a preset second voltage value (e.g., 2 V), so that the shifting fork is prevented from deforming due to overlarge driving force when the shifting fork reaches the gear hard-stop point. The control voltage is reduced to 0 after continuing for a preset first time (e.g., 15 ms) so as to prevent the shifting fork from springing back. At this moment, a current first pulse value may be recorded (e.g., the pulse number of the Hall signal output by the Hall sensor in the motor is recorded) as a pulse number of the gear hard-stop point.

For example, the controller provides a forward voltage of 3 V to the driving motor to drive the shifting fork to move towards a gear hard-stop point at one end, detects whether the shifting fork reaches the gear hard-stop point at one end in real time, and reduces the control voltage of the driving motor from 3 V to 2 V to prevent the shifting fork from deforming due to overlarge driving force when the shifting fork reaches the gear hard-stop point at one end. The control voltage is reduced to 0 after continuing for 15 ms so as to avoid spring-back. At this moment, the current pulse number of the Hall signal output by the Hall sensor in the motor may be recorded as a pulse number X1 of the gear hard-stop point at one end.

Or, the controller provides a backward voltage value of 3 V to the driving motor to drive the shifting fork to move towards a gear hard-stop point at the other end, detects whether the shifting fork reaches the gear hard-stop point at the other end in real time, and reduces the control voltage of the driving motor from 3 V to 2 V to prevent the shifting fork from deforming due to overlarge driving force when the shifting fork reaches the gear hard-stop point at the other end. The control voltage is reduced to 0 after continuing for 15 ms so as to avoid spring-back. At this moment, the pulse number of the Hall signal output by the Hall sensor in the motor may be recorded as a pulse number Y1 of the gear hard-stop point at the other end.

It is to be explained that by performing simple mathematical operation on the pulse number X1 of the gear hard-stop point at one end and the pulse number Y1 of the gear hard-stop point at the other end, a total pulse value of a distance between the gear hard-stop points at the two ends can be accurately obtained, then the total pulse value is converted into a millimeter value according to a ratio of a lead of a lead screw to a pulse number of one revolution of a ball screw, and each gear is assigned according to the distance between the gear hard-stop points at the two ends, and the range of each gear is set, so as to realize gear self-learning.

Therefore, a shifting fork can be effectively prevented from deforming, and can be effectively prevented from springing back, so that a pulse number of a gear hard-stop point can be accurately recorded, and the failure rate of self-learning can be reduced.

At 522, the control voltage is gradually reduced from the first voltage value to 0 when it is detected that the shifting fork reaches the gear hard-stop point, and a current second pulse value is recorded as a pulse number of the gear hard-stop point.

According to one embodiment of the present invention, the operation that the control voltage is gradually reduced from the first voltage value to 0 includes that: the control voltage is gradually reduced from the first voltage value to 0 according to a preset voltage reduction gradient. The preset voltage reduction gradient may be calibrated according to an actual situation. For example, the preset voltage reduction gradient may refer to reduction by 0.5 V per 2.5 ms.

As another possible implementation, after the driving motor drives the shifting fork to move towards the gear hard-stop point and it is detected that the shifting fork reaches the gear hard-stop point, the control voltage of the driving motor may be gradually reduced by the controller from the first voltage value to 0 within a certain time according to a certain voltage reduction gradient. At this moment, a current second pulse value may be recorded (e.g., the pulse number of the Hall signal output by the Hall sensor in the motor is recorded) as a pulse number of the gear hard-stop point.

For example, the controller provides a forward voltage of 3 V to the driving motor to drive the shifting fork to move towards a gear hard-stop point at one end, detects whether the shifting fork reaches the gear hard-stop point at one end in real time, and gradually reduces the control voltage of 3 V according to a gradient of reducing by 0.5 V per 2.5 ms after it is detected that the shifting fork reaches the gear hard-stop point at one end until the control voltage is 0. At this moment, the pulse number of the Hall signal output by the Hall sensor in the motor may be recorded as a pulse number X2 of the gear hard-stop point at one end.

The controller provides a backward voltage of 3 V to the driving motor to drive the shifting fork to move towards a gear hard-stop point at the other end, detects whether the shifting fork reaches the gear hard-stop point at the other end in real time, and gradually reduces the control voltage of 3 V according to a gradient of reducing by 0.5 V per 2.5 ms after it is detected that the shifting fork reaches the gear hard-stop point at the other end until the control voltage is 0. At this moment, the pulse number of the Hall signal output by the Hall sensor in the motor may be recorded as a pulse number Y2 of the gear hard-stop point at the other end.

It is to be explained that by performing simple mathematical operation on the pulse number X2 of the gear hard-stop point at one end and the pulse number Y2 of the gear hard-stop point at the other end, a total pulse value of a distance between the gear hard-stop points at the two ends can be accurately obtained, then the total pulse value is converted into a millimeter value according to a ratio of a lead of a lead screw to a pulse number of one revolution of a ball screw, and each gear is assigned according to the distance between the gear hard-stop points at the two ends, and the range of each gear is set, so as to realize gear self-learning.

Therefore, a shifting fork can be effectively prevented from deforming, and can be effectively prevented from springing back, so that a pulse number of a gear hard-stop point can be accurately recorded, and the failure rate of self-learning can be reduced.

According to one embodiment of the present invention, after it is detected that the shifting fork reaches the gear hard-stop point, the method further includes that: whether time when the shifting fork reaches the gear hard-stop point exceeds a preset second time is determined; and if yes, the step of reducing a control voltage of a driving motor from a preset first voltage value to a preset second voltage value is executed, or the step of gradually reducing the control voltage from the first voltage value to 0 is executed. The preset second time may be calibrated according to an actual situation. For example, the second time may be 30 ms.

Specifically, after it is detected that the shifting fork reaches the gear hard-stop point, before steps S21 and S22 are executed, whether time when the shifting fork reaches the gear hard-stop point exceeds a preset second time needs to be determined, that is, the current of the driving motor needs to be detected in real time to determine whether time when the current of the driving motor exceeds a preset current threshold exceeds a preset second time, so as to prevent the situation of current fluctuation of the driving motor. Therefore, whether the shifting fork reaches a preset position can be accurately determined to guarantee the accuracy of the recorded pulse number of the gear hard-stop point.

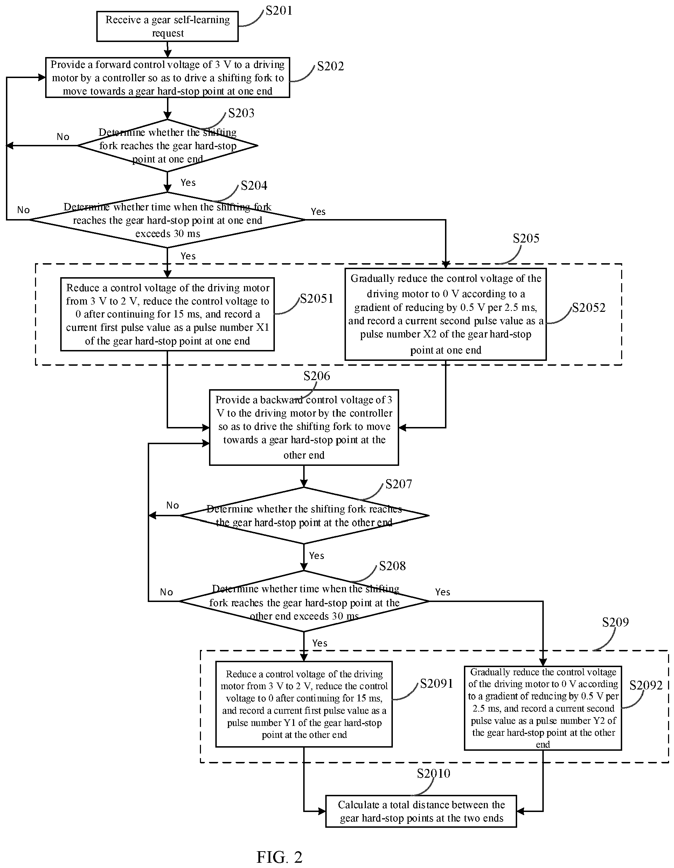

In order that those skilled in the art can more clearly understand the present invention, the control method for gear detection of a speed reducer is further described with reference to specific examples of the present invention. Specifically, as shown in FIG. 2, the control method for gear detection of a speed reducer according to one specific embodiment of the present invention may include the following steps.

At S201, a gear self-learning request is received.

At S202, a forward control voltage of 3 V is provided to a driving motor by a controller so as to drive a shifting fork to move towards a gear hard-stop point at one end.

At S203, whether the shifting fork reaches the gear hard-stop point at one end is determined. If yes, step S204 is executed, and if no, step S202 is executed again. Whether the shifting fork reaches the gear hard-stop point at one end may be determined by determining whether the current of the driving motor exceeds 30 A. If the current of the driving motor exceeds 30 A, it is determined that the shifting fork reaches the gear hard-stop point at one end.

At S204, whether time when the shifting fork reaches the gear hard-stop point at one end exceeds 30 ms is determined. If yes, step S205 is executed, where step S205 may include step S2051 or step S2052. If no, step S202 is executed again.

At S2051, a control voltage of the driving motor is reduced from 3 V to 2 V, and is reduced to 0 after continuing for 15 ms, and a current first pulse value is recorded as a pulse number X1 of the gear hard-stop point at one end.

At S2052, the control voltage of the driving motor is gradually reduced to 0 V according to a gradient of reducing by 0.5 V per 2.5 ms, and a current second pulse value is recorded as a pulse number X2 of the gear hard-stop point at one end.

At S206, a backward control voltage of 3 V is provided to the driving motor by the controller so as to drive the shifting fork to move towards a gear hard-stop point at the other end.

At S207, whether the shifting fork reaches the gear hard-stop point at the other end is determined. If yes, step S208 is executed, and if no, step S206 is executed again. Whether the shifting fork reaches the gear hard-stop point at the other end may be determined by determining whether the current of the driving motor exceeds 30 A. If the current of the driving motor exceeds 30 A, it is determined that the shifting fork reaches the gear hard-stop point at the other end.

At S208, whether time when the shifting fork reaches the gear hard-stop point at the other end exceeds 30 ms is determined. If yes, step S209 is executed, where step S209 may include step S2091 or step S2092. If no, step S206 is executed again.

At S2091, a control voltage of the driving motor is reduced from 3 V to 2 V, and is reduced to 0 after continuing for 15 ms, and a current first pulse value is recorded as a pulse number Y1 of the gear hard-stop point at the other end.

At S2092, the control voltage of the driving motor is gradually reduced to 0 V according to a gradient of reducing by 0.5 V per 2.5 ms, and a current second pulse value is recorded as a pulse number Y2 of the gear hard-stop point at the other end.

At S2010, a total distance between the gear hard-stop points at the two ends is calculated.

Therefore, through the above control strategy, the shifting fork can be effectively prevented from deforming, and can be effectively prevented from springing back in the gear self-learning process, so that the pulse numbers of the gear hard-stop points can be accurately recorded, and the total distance between the gear hard-stop points at the two ends can be accurately calculated, thereby meeting the requirement of a mechanical theory, greatly reducing the failure rate of gear self-learning, and improving the accuracy of the obtained gear information.

In summary, in the control method for gear detection of a speed reducer according to the embodiments of the present invention, whether a shifting fork reaches a gear hard-stop point is detected in a gear self-learning process, a control voltage of a driving motor is reduced from a preset first voltage value to a preset second voltage value when detecting that the shifting fork reaches the gear hard-stop point, the control voltage is reduced to 0 after continuing for a preset first time, and a current first pulse value is recorded as a pulse number of the gear hard-stop point; or, the control voltage is gradually reduced from the first voltage value to 0 when detecting that the shifting fork reaches the gear hard-stop point, and a current second pulse value is recorded as a pulse number of the gear hard-stop point. Therefore, a shifting fork can be effectively prevented from deforming, and can be effectively prevented from springing back, so that a pulse number of a gear hard-stop point can be accurately recorded, and the failure rate of gear self-learning can be reduced.

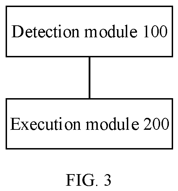

FIG. 3 is a schematic block diagram of a control apparatus for gear detection of a speed reducer according to embodiments of the present invention. As shown in FIG. 3, the control apparatus for gear detection of a speed reducer according to the embodiments of the present invention may include a detection module 100 and an execution module 200.

The detection module 100 is configured to detect whether a shifting fork reaches a gear hard-stop point in a gear self-learning process. The execution module 200 is configured to reduce a control voltage of a driving motor from a preset first voltage value to a preset second voltage value when detecting that the shifting fork reaches the gear hard-stop point, reduce the control voltage to 0 after continuing for a preset first time, and record a current first pulse value as a pulse number of the gear hard-stop point; or, gradually reduce the control voltage from the first voltage value to 0 when detecting that the shifting fork reaches the gear hard-stop point, and record a current second pulse value as a pulse number of the gear hard-stop point.

According to one embodiment of the present invention, the execution module 200 is specifically configured to: gradually reduce the control voltage from the first voltage value to 0 according to a preset voltage reduction gradient.

It is to be noted that the details not disclosed in the control apparatus for gear detection of a speed reducer according to the embodiments of the present invention are referred to the details disclosed in the control method for gear detection of a speed reducer according to the embodiments of the present invention. More descriptions are omitted herein.

In the control apparatus for gear detection of a speed reducer according to the embodiments of the present invention, the detection module detects whether a shifting fork reaches a gear hard-stop point in a gear self-learning process, and the execution module reduces a control voltage of a driving motor from a preset first voltage value to a preset second voltage value when detecting that the shifting fork reaches the gear hard-stop point, reduces the control voltage to 0 after continuing for a preset first time, and records a current first pulse value as a pulse number of the gear hard-stop point, or, gradually reduces the control voltage from the first voltage value to 0 when detecting that the shifting fork reaches the gear hard-stop point, and records a current second pulse value as a pulse number of the gear hard-stop point. Therefore, a shifting fork can be effectively prevented from deforming, and can be effectively prevented from springing back, so that a pulse number of a gear hard-stop point can be accurately recorded, and the failure rate of gear self-learning can be reduced.

In addition, the embodiments of the present invention also provide a vehicle, which includes the above control apparatus for gear detection of a speed reducer.

In the vehicle according the embodiments of the present invention, by means of the above control apparatus for gear detection of a speed reducer, a shifting fork can be effectively prevented from deforming, and can be effectively prevented from springing back, so that a pulse number of a gear hard-stop point can be accurately recorded, and the failure rate of gear self-learning can be reduced.

In addition, the embodiments of the present invention also provide an electronic device, which includes: a memory, a processor, and a computer program that is stored on the memory and executable on the processor, where the processor, when executing the program, implements the above control method for gear detection of a speed reducer.

In the electronic device according the embodiments of the present invention, by performing the above control method for gear detection of a speed reducer, a shifting fork can be effectively prevented from deforming, and can be effectively prevented from springing back, so that a pulse number of a gear hard-stop point can be accurately recorded, and the failure rate of gear self-learning can be reduced.

In addition, the embodiments of the present invention also provide a non-temporary computer-readable storage medium, having a computer program stored thereon, where the program, when executed by a processor, implements the above control method for gear detection of a speed reducer.

In the non-temporary computer-readable storage medium according the embodiments of the present invention, by performing the above control method for gear detection of a speed reducer, a shifting fork can be effectively prevented from deforming, and can be effectively prevented from springing back, so that a pulse number of a gear hard-stop point can be accurately recorded, and the failure rate of gear self-learning can be reduced.

It is to be understood that portions of the present invention may be implemented in hardware, software, firmware, or a combination thereof. In the above implementations, multiple steps or methods may be implemented in software or firmware stored in the memory and executed by an appropriate instruction execution system. For example, if implemented in hardware, as in another implementation, the steps or methods may be implemented using any one or a combination of the following technologies known in the art: discrete logic circuits with logic gates for implementing logic functions on data signals, invention specific integrated circuits with appropriate combinational logic gates, programmable gate arrays (PGAs), field programmable gate arrays (FPGAs), etc.

In addition, in the description of the present invention, the orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are the orientations or positional relationships shown in the drawings, are merely to facilitate describing the present invention and to simplify the description, are not intended to indicate or imply that the referenced apparatus or element must have a particular orientation, be constructed and operated in a particular orientation, and therefore are not to be construed as limiting the present invention.

In addition, the terms "first" and "second" are used for descriptive purposes only and are not to be construed as indicating or implying relative importance or implicitly indicating the number of technical features indicated. Therefore, features defining "first" and "second" may explicitly or implicitly include at least one such feature. In the description of the present invention, the meaning of "plurality" is at least two, e.g. two or three, unless specifically defined otherwise.

In the present invention, unless expressly stated and defined otherwise, the terms "mounting", "connected", "connection", "fixed", etc. are to be construed broadly, for example, as fixed connection, detachable connection or integral connection, as mechanical connection or electrical connection, and as direct connection or indirect connection via an intermediary or communication inside two elements or interaction between two elements unless expressly defined otherwise. Those of ordinary skill in the art can understand specific meanings of the above terms in the present invention in specific situations.

In the present invention, unless expressly stated and defined otherwise, a first feature "on" or "beneath" a second feature may be that the first and second features are in direct contact, or that the first and second features are in indirect contact via an intermediary. Moreover, the first feature "over", "above" and "up" the second feature may be that the first feature is directly above or obliquely above the second feature, or simply indicates that a horizontal height of the first feature is higher than that of the second feature. The first feature "under", "below" and "down" the second feature may be that the first feature is directly below or obliquely below the second feature, or simply indicates that a horizontal height of the first feature is less than that of the second feature.

In the description of the present invention reference to the description of the terms "one embodiment", "some embodiments", "examples", "specific examples", or "some examples", etc. means that specific features, structures, materials, or characteristics described in connection with the embodiment or example are included in at least one embodiment or example of the present invention. In the present invention, schematic representations of the above terms are not necessarily directed to the same embodiments or examples. Moreover, the specific features, structures, materials, or characteristics described may be combined in any one or more embodiments or examples in a suitable manner.

## Claims

1. A control method for gear detection of a speed reducer, comprising:
during a gear self-learning process, controlling a driving motor of the speed reducer to drive a shifting fork of the speed reducer to move towards a gear hard-stop point according to a preset first voltage value, and
detecting whether the shifting fork reaches the gear hard-stop point;
the method further comprises the following steps:
reducing a control voltage of the driving motor from the preset first voltage value to a preset second voltage value, when it is detected that the shifting fork reaches the gear hard-stop point, reducing the control voltage to 0 after continuing for a preset first time, and after reducing the control voltage to 0 recording a current first pulse value as a pulse number of the gear hard-stop point; or
gradually reducing the control voltage from the first voltage value to 0, when it is detected that the shifting fork reaches the gear hard-stop point, and after reducing the control voltage to 0 recording a current second pulse value as a pulse number of the gear hard-stop point.

2. The control method according to claim 1, wherein
the step of gradually reducing the control voltage from the first voltage value to 0 comprises:
gradually reducing the control voltage from the first voltage value to 0 according to a preset voltage reduction gradient.

3. The control method according to claim 1 or 2, wherein
after detecting that the shifting fork reaches the gear hard-stop point, the method further comprises:
determining whether time after the shifting fork reaches the gear hard-stop point exceeds a preset second time; and
if yes, executing the step of reducing the control voltage of the driving motor from the preset first voltage value to the preset second voltage value, or executing the step of gradually reducing the control voltage from the first voltage value to 0.

4. The control method according to any one of claims 1 to 3, wherein
the step of detecting whether a shifting fork reaches a gear hard-stop point comprises:
determining whether the current of the driving motor exceeds a preset current threshold; and
if yes, determining that the shifting fork reaches the gear hard-stop point.

5. A control apparatus for gear detection of a speed reducer, comprising:
a detection module (100), configured to, during a gear self-learning process, control a driving motor of the speed reducer to drive a shifting fork of the speed reducer to move towards a gear hard-stop point according to a preset first voltage value, and detect whether the shifting fork reaches the gear hard-stop point;
the control apparatus further comprises:
an execution module (200), configured to reduce a control voltage of the driving motor from the preset first voltage value to a preset second voltage value when it is detected that the shifting fork reaches the gear hard-stop point, reduce the control voltage to 0 after continuing for a preset first time, and after reducing the control voltage to 0 record a current first pulse value as a pulse number of the gear hard-stop point; or, gradually reduce the control voltage from the first voltage value to 0 when it is detected that the shifting fork reaches the gear hard-stop point, and after reducing the control voltage to 0 record a current second pulse value as a pulse number of the gear hard-stop point.

6. The control apparatus according to claim 5, wherein
the execution module (200) is specifically configured, when gradually reducing the control voltage, to:
gradually reduce the control voltage from the first voltage value to 0 according to a preset voltage reduction gradient.

7. A vehicle, which comprises a speed reducer having a driving motor and a shit fork, and further comprises:
a control apparatus for gear detection of said speed reducer according to any one of claims 5 to 6.

8. A non-temporary computer-readable storage medium, having a computer program stored thereon, wherein
the program, when executed by a processor, implements the control method for gear detection of a speed reducer according to any one of claims 1 to 4.

## Patentansprüche

1. Steuerverfahren zur Gangerkennung eines Untersetzungsgetriebes, mit den folgenden Schritten:
während eines Getriebe-Selbstlernvorgangs, Steuern eines Antriebsmotors des Untersetzungsgetriebes, um eine Schaltgabel des Untersetzungsgetriebes entsprechend einem ersten vorgegebenen Spannungswert so anzutreiben, dass diese sich in Richtung eines Getriebefestanschlagpunkts bewegt, und
Erkennen, ob die Schaltgabel den Getriebefestanschlagspunkt erreicht,
wobei das Verfahren die folgenden Schritte aufweist:
Verringern einer Steuerspannung des Antriebsmotors von dem vorgegebenen ersten Spannungswert auf einen vorgegebenen zweiten Spannungswert, wenn erkannt wird, dass die Schaltgabel des Getriebefestanschlagspunkt erreicht, Verringern des Steuerspannung auf 0 nach dem Fortfahren über einen vorgegebenen ersten Zeitraum, und nach dem Verringern der Steuerspannung auf 0, Aufzeichnen eines aktuellen ersten Impulswerts als eine Impulszahl des Getriebefestanschlagpunkts, oder
allmähliches Verringern der Steuerspannung von dem ersten Spannungswert auf 0, wenn erkannt wird, dass die Schaltgabel den Getriebefestanschlagpunkt erreicht, und nach dem Verringern der Steuerspannung auf 0, Aufzeichnen eines aktuellen zweiten Impulswerts als eine Impulszahl des Getriebefestanschlagpunkts.

2. Steuerverfahren nach Anspruch 1, bei welchem der Schritt des allmählichen Verringerns der Steuerspannung von der ersten Spannung auf 0 aufweist:
das allmähliche Verringern der Steuerspannung von dem ersten Spannungswert auf 0 gemäß einem vorgegebenen Spannungsverringerungsgradienten.

3. Steuerverfahren nach Anspruch 1 oder 2, bei welchem das Verfahren nach dem Erkennen, dass die Schaltgabel den Getriebefestanschlagpunkt erreicht, ferner aufweist:
Feststellen, ob die Zeitspanne nach dem Erreichen des Getriebefestanschlagpunkts durch die Schaltgabel eine vorgegebene zweite Zeitspanne übersteigt; und
falls ja, Ausführen des Schritts des Verringerns der Steuerspannung des Antriebsmotors von dem vorgegebenen ersten Spannungswert auf den vorgegebenen zweiten Spannungswert, oder Ausführen des Schritts des allmählichen Verringerns der Steuerspannung von dem ersten Spannungswert auf 0.

4. Steuerverfahren nach einem der Ansprüche 1 bis 3, bei welchem der Schritt des Erkennens, ob eine Schaltgabel einen Getriebefestanschlagpunkt erreicht, aufweist:
Feststellen, ob der Strom des Antriebsmotors einen vorgegebenen Stromschwellenwert übersteigt; und
falls ja, Feststellen, dass die Schaltgabel den Getriebefestanschlagpunkt erreicht.

5. Steuervorrichtung zur Gangerkennung eines Untersetzungsgetriebes, mit:
einem Erkennungsmodul (100), das dazu ausgebildet ist, während eines Getriebe-Selbstlernvorgangs, einen Antriebsmotor des Untersetzungsgetriebes zu steuern, um eine Schaltgabel des Untersetzungsgetriebes entsprechend einem ersten vorgegebenen Spannungswert so anzutreiben, dass diese sich in Richtung eines Getriebefestanschlagpunkts bewegt, und zu erkennen, ob die Schaltgabel den Getriebefestanschlagpunkt erreicht;
wobei die Steuervorrichtung ferner aufweist:
ein Ausführungsmodul (200), das dazu ausgebildet ist, eine Steuerspannung des Antriebsmotors von dem vorgegebenen ersten Spannungswert auf einen vorgegebenen zweiten Spannungswert zu verringern, wenn erkannt wird, dass die Schaltgabel des Getriebefestanschlagspunkt erreicht, die Steuerspannung nach dem Fortfahren über einen vorgegebenen ersten Zeitraum auf 0 zu verringern, und nach dem Verringern der Steuerspannung auf 0, einen aktuellen ersten Impulswert als eine Impulszahl des Getriebefestanschlagpunkts aufzuzeichnen, oder die Steuerspannung allmählich von dem ersten Spannungswert auf 0 zu verringern, wenn erkannt wird, dass die Schaltgabel den Getriebefestanschlagpunkt erreicht, und nach dem Verringern der Steuerspannung auf 0, einen aktuellen zweiten Impulswert als eine Impulszahl des Getriebefestanschlagpunkts aufzuzeichnen.

6. Steuervorrichtung nach Anspruch 5, bei welcher das Ausführungsmodul (200) insbesondere dazu ausgebildet ist, wenn es die Steuerspannung allmählich verringert,
die Steuerspannung entsprechend einem vorgegebenen Spannungsverringerungsgradienten allmählich von dem ersten Spannungswert auf 0 zu verringern.

7. Fahrzeug, das ein Untersetzungsgetriebe mit einem Antriebsmotor und einer Schaltgabel aufweist, und ferner eine Steuervorrichtung zur Gangerkennung des Untersetzungsgetriebes nach einem der Ansprüche 5 bis 6 aufweist.

8. Nicht-flüchtiges computerlesbares Speichermedium mit einem darauf gespeicherten Computerprogramm, bei welchem das Programm, wenn es von einem Prozessor ausgeführt wird, das Steuerverfahren zur Gangerkennung eines Untersetzungsgetriebes nach einem der Ansprüche 1 bis 4 implementiert.

## Revendications

1. Procédé de commande permettant la détection de vitesse d'un réducteur, comprenant :
pendant un processus d'apprentissage automatique de vitesse, la commande d'un moteur d'entraînement du réducteur pour entraîner une fourchette de changement de vitesse du réducteur pour se déplacer vers une butée dure de vitesse selon une première valeur de tension prédéfinie, et
la détection du fait de savoir si la fourchette de changement de vitesse atteint la butée dure de vitesse ;
le procédé comprend en outre les étapes suivantes :
la réduction d'une tension de commande du moteur d'entraînement de la première valeur de tension prédéfinie à une seconde valeur de tension prédéfinie, lorsqu'il est détecté que la fourchette de changement de vitesse atteint la butée dure de vitesse, la réduction de la tension de commande à 0 après avoir continué pendant un premier temps prédéfini, et après avoir réduit la tension de commande à 0, l'enregistrement d'une première valeur d'impulsion actuelle en tant que nombre d'impulsions de la butée dure de vitesse ; ou
la réduction de manière progressive de la tension de commande de la première valeur de tension à 0, lorsqu'il est détecté que la fourchette de changement de vitesse atteint la butée dure de vitesse, et après avoir réduit la tension de commande à 0, l'enregistrement d'une seconde valeur d'impulsion actuelle en tant que nombre d'impulsions de la butée dure de vitesse.

2. Procédé de commande selon la revendication 1, dans lequel l'étape de réduction progressive de la tension de commande de la première valeur de tension à 0 comprend :
la réduction de manière progressive de la tension de commande de la première valeur de tension à 0 selon un gradient de réduction de tension prédéfini.

3. Procédé de commande selon la revendication 1 ou 2, dans lequel après avoir détecté que la fourchette de changement de vitesse atteint la butée dure de vitesse, le procédé comprend en outre :
la détermination du fait de savoir si le temps après que la fourchette de changement de vitesse ait atteint la butée dure de vitesse dépasse un second temps prédéfini ; et
si oui, l'exécution de l'étape de réduction de la tension de commande du moteur d'entraînement de la première valeur de tension prédéfinie à la seconde valeur de tension prédéfinie, ou l'exécution de l'étape de réduction progressive de la tension de commande de la première valeur de tension à 0.

4. Procédé de commande selon l'une quelconque des revendications 1 à 3, dans lequel l'étape de détection du fait de savoir si une fourchette de changement de vitesse atteint une butée dure de vitesse comprend :
la détermination du fait de savoir si le courant du moteur d'entraînement dépasse un seuil de courant prédéfini ; et
si oui, la détermination que la fourchette de changement de vitesse atteint la butée dure de vitesse.

5. Appareil de commande pour la détection de vitesse d'un réducteur, comprenant :
un module de détection (100), configuré pour, lors d'un processus d'apprentissage automatique de vitesse, commander un moteur d'entraînement du réducteur pour entraîner une fourchette de changement de vitesse du réducteur pour se déplacer vers une butée dure de vitesse selon une première valeur de tension prédéfinie et pour détecter si la fourchette de changement de vitesse atteint la butée dure de vitesse ;
l'appareil de commande comprend en outre :
un module d'exécution (200), configuré pour réduire une tension de commande du moteur d'entraînement de la première valeur de tension prédéfinie à une seconde valeur de tension prédéfinie lorsqu'il est détecté que la fourchette de changement de vitesse atteint la butée dure de vitesse, pour réduire la tension de commande à 0 après avoir continué pendant un premier temps prédéfini, et après avoir réduit la tension de commande à 0, pour enregistrer une première valeur d'impulsion actuelle en tant que nombre d'impulsions de la butée dure de vitesse ; ou, pour réduire progressivement la tension de commande de la première valeur de tension à 0 lorsqu'il est détecté que la fourchette de changement de vitesse atteint la butée dure de vitesse, et après avoir réduit la tension de commande à 0, pour enregistrer une seconde valeur d'impulsion actuelle en tant que nombre d'impulsions de la butée dure de vitesse.

6. Appareil de commande selon la revendication 5, dans lequel le module d'exécution (200) est spécifiquement configuré, lors de la réduction progressive de la tension de commande, pour :
réduire progressivement la tension de commande de la première valeur de tension à 0 selon un gradient de réduction de tension prédéfini.

7. Véhicule, qui comprend un réducteur ayant un moteur d'entraînement et une fourchette de changement de vitesse, et comprend en outre un appareil de commande pour la détection de vitesse dudit réducteur selon l'une quelconque des revendications 5 à 6.

8. Support de stockage lisible par ordinateur non temporaire, sur lequel est stocké un programme informatique, dans lequel le programme, lorsqu'il est exécuté par un processeur, met en oeuvre le procédé de commande pour la détection de vitesse d'un réducteur selon l'une quelconque des revendications 1 à 4.
